# EUROPÄISCHE PATENTSCHRIFT

(11) **EP 1 535 763 B1**
(45) Veröffentlichungstag und Bekanntmachung des Hinweises auf die Patenterteilung: **12.09.2007**
(21) Anmeldenummer: 04105336.4
(22) Anmeldetag: 27.10.2004
(51) Int. Cl.: B60C 15/06

(54) **Verfahren zur Herstellung eines Fahrzeugluftreifens**
Method of manufacturing of a pneumatic tyre for vehicles
Méthode pour la fabrication d'un bandage pneumatique pour véhicules

(30) Priorität: 28.11.2003 DE 10355737
(43) Veröffentlichungstag der Anmeldung: 01.06.2005
(73) Patentinhaber: Continental Aktiengesellschaft, 30165 Hannover (DE)
(72) Erfinder: Ramcke, Uwe, 29664, Walsrode (DE)

(56) Entgegenhaltungen:
- EP-A- 0 589 291
- DE-A1- 3 234 889
- US-A- 5 622 576
- US-A- 6 135 181
- PATENT ABSTRACTS OF JAPAN Bd. 008, Nr. 136 (M-304), 23. Juni 1984 (1984-06-23) & JP 59 034905 A (YOKOHAMA GOMU KK), 25. Februar 1984 (1984-02-25)
- PATENT ABSTRACTS OF JAPAN Bd. 2000, Nr. 05, 14. September 2000 (2000-09-14) & JP 2000 043517 A (YOKOHAMA RUBBER CO LTD:THE), 15. Februar 2000 (2000-02-15)

## Beschreibung

Die Erfindung betrifft ein Verfahren zur Herstellung eines Fahrzeugluftreifen für LKW mit einer insbesondere einlagigen, Stahlcorde aufweisenden Radialkarkasse, Wulstkernen, Kernprofilen und zumindest einer Wulstverstärkerlage.

Wulstverstärker in den Wulstbereichen von LKW-Reifen dienen dazu, Ablösungserscheinungen der umgeschlagenen Endabschnitte der Karkasse aufgrund der höheren Beanspruchungen in diesen Bereichen beim Fahrbetrieb zu verhindern.

Aus der US 6,135,181 ist ein pannensicherer Fahrzeugluftreifen bekannt, dessen Seitenwände mit mindestens zwei versteifenden Inserts verstärkt sind. Auch die Wulstbereiche sind verstärkt ausgeführt, beispielsweise mit einer als Festigkeitsträger Stahlcorde enthaltenden Wulstverstärkerlage, welche zwischen der Karkasse auf der einen Seite und dem Wulstkern bzw. einem Kernprofil auf der anderen Seite, an beiden Seiten den Kernprofils verlaufend, angeordnet ist.

Ein weiterer Fahrzeugluftreifenmit einem Wulstverstärker ist aus der DE 32 34 889 A1 bekannt. Der in jedem Wulstbereich vorgesehene Wulstverstärker besteht aus mehreren im Kreuzverband aneinander liegenden Lagen aus zugfesten textilen Festigkeitsträgern, die unter einem Winkel von 15° bis 50° zur Reifenumfangsrichtung verlaufen. Sämtliche Wulstverstärkerlagen sind an der Außenseite der Radialkarkasse angeordnet. Bei einer der Ausführungsformen besteht der Wulstverstärker aus drei Gewebelagen, von welchen die axial am weitesten außen befindliche Lage vollständig um den Wulstkern herumgeführt ist.

Aus der US 4,852,626 A ist es bekannt, eine Wulstverstärkerlage bestehend aus in Gummi eingebetteten Stahlcorden zwischen einem radial außerhalb der Wulstkerne verlaufendem Kernprofil und dem vom Gürtel kommenden Bereich der Karkasslage anzuordnen und eine zweite Wulstverstärkerlage, welche ebenfalls Stahlcorde aufweist, außerhalb der Karkasslage anzuordnen und um die Wulstkerne verlaufend anzuordnen.

Die Fertigung von Reifen mit Wulstverstärkerlagen ist aufwändig und es besteht der Wunsch nach Vereinfachung.

Der Erfindung liegt daher die Aufgabe zu Grunde, die Fertigung eines Reifens mit Wulstverstärkerlagen zu vereinfachen und zu rationalisieren.

Die Aufgabe wird erfindungsgemäß dadurch gelöst, dass Wulstkernverbände jeweils bestehend aus zumindest einer Lage eines Stahlcord als Festigkeitsträger aufweisenden Wulstverstärkers, dem Wulstkern und dem Kernprofil vorgefertigt werden.

Mit derart vorgefertigten Kernverbänden lässt sich der Reifen rationeller und schneller an der Aufbaumaschine aufbauen, wobei das Servicersystem wesentlich einfacher sein kann als bei herkömmlichen Aufbaumaschinen. Ein weiterer Vorteil der Erfindung ist die erzielbare Vorverdichtung der Kemverbände. Diese wirkt sich auf die Reifenhaltbarkeit günstig aus.

Die mit derartigen Wulstverstärkern hergestellten Reifen enthalten daher in jedem Wulstbereich zumindest eine als Festigkeitsträger Stahlcorde enthaltende Wulstverstärkerlage, welche zwischen der Karkasse auf der einen Seite und dem Wulstkern bzw. dem Kernprofil auf der anderen Seite, an beiden Seiten des Kernprofils verlaufend, angeordnet ist. Durch diese Anordnung und Ausführung der Wulstverstärkerlage kann eine sehr gute Haltbarkeit des Reifens sichergestellt werden. Die mit Festigkeitsträgern aus Stahlcord versehenen Wulstverstärkerlagen gewährleisten eine zuverlässige Versteifung des Reifens im Bereich oberhalb der Wulstkerne und sind derart in der Lage, die Karkassumschläge zu entlasten.

Bei einem erfindungsgemäßen Verfahren ist es von besonderem Vorteil, dass die Wulstkernverbände auf einer eine zylindrische Trommel aufweisenden Aufbaumaschine separat und ringförmig vorgefertigt werden. Mit den vorgefertigten Kernverbänden kann der Reifen an der Aufbaumaschine sehr rationell und schnell aufgebaut werden. Dazu brauchen lediglich die vorgefertigten Wulstkernverbände beim Aufbau des Reifens auf der aufgelegten Karkasslage positioniert zu werden.

Weitere Merkmale, Vorteile und Einzelheiten der Erfindung werden anhand der Zeichnung, die schematisch Ausführungsbeispiele der Erfindung darstellt, näher beschrieben. Dabei zeigen
Fig. 1 schematisch einzelne Schritte zur Vorfertigung eines Wulstkemverbandes und
Fig. 2 und 3 Ausführungen von Wulstbereichen eines Fahrzeugluftreifens anhand von radialen Teilschnitten durch diese Bereiche eines Fahrzeugluftreifens.

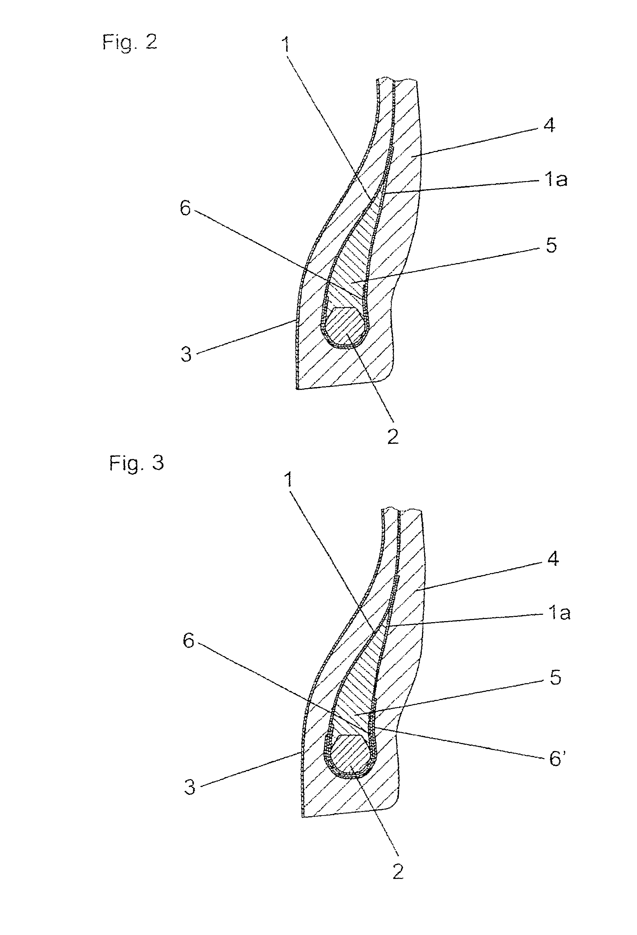

In Fig. 2 und 3 sind Ausführungen von Wulstbereichen von LKW - Radialreifen dargestellt. Der Reifen weist eine Radialkarkasse 1 mit Stahlcorden als Festigkeitsträgern auf, die zumindest im Wesentlichen in einem rechten Winkel zur Umfangsrichtung des Reifens verlaufen. Die Radialkarkasse 1 ist in den Reifenwülsten von innen nach außen um dort befindliche, zugfeste und aus Stahl bestehende Wulstkerne 2 und um radial außerhalb der Wulstkerne 2 angeordnete elastomere Kemprofile 5 geführt. Der nach außen umgeschlagene Abschnitt 1a der Karkasse 1 reicht mit seinem Ende bis zu einer Höhe, die dem 0,1 bis 0,3 - Fachen der maximalen Querschnittshöhe des Reifens entspricht. Als weitere Bauteile des Reifens sind eine Innenschicht 3, eine Seitenwand 4 und zwischen den Wulstkernen 2 und den Kernprofilen 5 auf der einen Seite und der Radialkarkasse 1 auf der anderen Seiten je eine Wulstverstärkerlage 6 dargestellt, welche ein Streifen aus in Gummi eingebetteten Stahlcorden ist.

Die zwischen der Radialkarkasse 1 und dem Wulstkern 2 mit Kernprofil 5 eingefügte Stahlcord-Wulstverstärkerlage 6 reicht an der Innenseite und der Außenseite des Wulstkernes 2 bzw. des Kemprofiles 5 bis auf eine Höhe, die mindestens 10% der maximalen Querschnittshöhe des Reifens entspricht. An der Innenseite des Wulstkernes 2 bzw. des Kernprofils 5 reicht die Wulstverstärkerlage höchstens auf 15% der maximalen Querschnittshöhe, an der Außenseite auf maximal 20 % der maximalen Querschnittshöhe des Reifens.

Bei der in Fig. 3 gezeigten Ausführungsform ist eine zweite Wulstverstärkerlage 6', welche ebenfalls aus in Gummi eingebetteten Stahlcorden besteht, zwischen der Radialkarkasse 1 und der Seitenwand 4 bzw. der Innenschicht 3 eingebracht. Diese Wulstverstärkerlage 6' wird derart eingebracht, dass sie an der Außenseite und der Innenseite des Wulstkernes 2 bzw. des Kemprofiles 5 maximal bis auf die Höhe des Kernprofils 5 reicht.

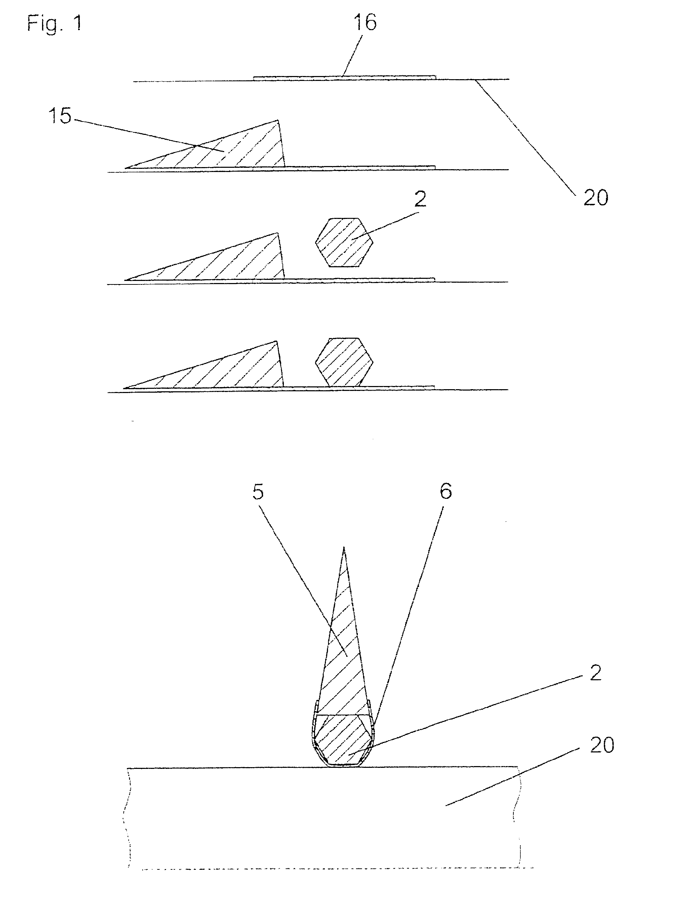

Wie Fig. 1 zeigt wird gemäß der Erfindung ein Wulstkemverband bestehend aus der Wulstverstärkerlage 6, dem aus einer vergleichsweisen harten Kautschukmischung erstellten Kernprofil 5 und dem Wulstkern 2 auf einer separaten Aufbaumaschine vorgefertigt. Dazu wird auf einer zylindrischen Trommel 20 umlaufend ein Wulstverstärkerstreifen 16 aufgelegt. Anschließend wird das elastomere Profil 15 zur Bildung des Kemprofiles 5 randseitig auf den Wulstverstärkerstreifen 16 und um die zylindrische Trommel 20 gelegt. Nun wird der Wulstkern 2 gesetzt, anschließend wird die Trommel 20 expandiert und der Wulstverstärkerstreifen 16 wird beidseitig des Wulstkernes 2 und des Profiles 15 hochgeschlagen. Ein Anrollen des Wulstverstärkerstreifens 16 vervollständigt die Vorfertigung des ringförmigen Wulstkernverbandes.

Die fertigen Wulstkernverbände werden beim Aufbau des Reifens auf der Karkasslage, die auf die Innenschicht und die Seitenwandteile aufgelegt worden ist, entsprechend positioniert, der Reifen wird auf herkömmliche Weise fertig aufgebaut und anschließend vulkanisiert.

Die Vorteile der erfindungsgemäßen Vorfertigung der Kemverbände liegen vor allem im schnellerer Aufbau des Rohreifens an der Aufbaumaschine und in der Vereinfachung der Servicersysteme.

Abweichend von der dargestellten und beschriebenen Ausführung können mehrere Wulstverstärkerlagen in vorgefertigten Wulstkemverbänden vorgesehen werden. Die Stahlcordfäden der Wulstverstärkerlage(n) können in einem beliebigen Winkel zur radialen Richtung orientiert sein, daher von der radialen Richtung bis zur Umfangsrichtung

## Patentansprüche

1. Verfahren zur Herstellung eines Fahrzeugluftreifen für LKW mit einer insbesondere einlagigen, Stahlcorde aufweisenden Radialkarkasse (1), Wulstkernen (2), Kernprofiles (5) und zumindest einer Wulstverstärkerlage (6),
**dadurch gekennzeichnet,**
**dass** Wulstkernverbände jeweils bestehend aus zumindest einer Lage eines Stahlcorde als Festigkeitsträger aufweisenden Wulstverstärkers (6), dem Wulstkern (2) und dem Kernprofil (5) vorgefertigt werden.

2. Verfahren nach Anspruch 1, **dadurch gekennzeichnet, dass** die Wulstkernverbände auf einer eine zylindrische Trommel (20) aufweisenden Aufbaumaschine ringförmig vorgefertigt werden

3. Verfahren nach Anspruch 1 oder 2, **dadurch gekennzeichnet, dass** die vorgefertigten Wulstkernverbände beim Aufbau des Reifens auf der aufgelegten Karkasslage (1) positioniert werden.

## Claims

1. Method for producing a pneumatic vehicle tyre for trucks, comprising a radial-ply casing (1), in particular of a single ply and including a steel cord, and comprising bead cores (2), bead fillers (5) and at least one bead reinforcing layer (6), **characterized in that** bead core assemblies are prefabricated, respectively comprising a bead reinforcer (6), having at least one layer of steel cords as a reinforcing element, the bead core (2) and the bead filler (5).

2. Method according to Claim 1, **characterized in that** the bead core assemblies are prefabricated in an annular form on a building machine having a cylindrical drum (20).

3. Method according to Claim 1 or 2, **characterized in that**, in the building of the tyre, the prefabricated bead core assemblies are positioned on the placed-on casing ply (1).

## Revendications

1. Procédé de fabrication d'un bandage pneumatique pour véhicule utilitaire, qui présente une carcasse radiale (1) en particulier en une couche et dotée de câbles d'acier, d'âmes de bourrelet (2), de profilés d'âme (5) et d'au moins une couche (6) de renfort de bourrelet,
**caractérisé en ce que**
des ensembles d'âme de bourrelet, tous constitués d'au moins une couche de renfort de bourrelet (6) qui présente des câbles d'acier comme renforts, de l'âme de bourrelet (2) et du profilé d'âme (5) sont préfabriqués.

2. Procédé selon la revendication 1, **caractérisé en ce que** les ensembles d'âme de bourrelet sont préfabriqués en forme d'anneau sur une machine de montage qui présente un tambour cylindrique (20).

3. Procédé selon les revendications 1 ou 2, **caractérisé en ce que** les ensembles préfabriqués d'âme de bourrelet sont placés sur la couche de carcasse (1) déposée lors du montage du bandage.
